Europäisches Patentamt

European Patent Office

Office européen des brevets

(11) Veröffentlichungsnummer: **0 312 936**
**B1**

# (12) EUROPÄISCHE PATENTSCHRIFT

(45) Veröffentlichungstag der Patentschrift:
**07.03.90**

(21) Anmeldenummer: **88117166.4**

(22) Anmeldetag: **15.10.88**

(51) Int. Cl.⁴: **B60K 11/08**

(54) Vorrichtung zur Beeinflussung des Kühlluftstroms an einem Kraftfahrzeug.

(30) Priorität: **23.10.87 DE 3735921**

(43) Veröffentlichungstag der Anmeldung:
**26.04.89 Patentblatt 89/17**

(45) Bekanntmachung des Hinweises auf die Patenterteilung:
**07.03.90 Patentblatt 90/10**

(84) Benannte Vertragsstaaten:
**DE ES FR GB IT**

(56) Entgegenhaltungen:
**DE-A- 3 150 152**
**DE-A- 3 214 588**

(73) Patentinhaber: **AUDI AG,**
**Auto-Union-Strasse 1 Postfach 220,**
**D-8070 Ingolstadt(DE)**

(72) Erfinder: **Grossmann, Holger, Blütenweg 10,**
**D-8070 Ingolstadt(DE)**
Erfinder: **Engel, Peter, Frankenring 3,**
**D-8079 Buxheim(DE)**

(74) Vertreter: **Engelhardt, Harald, AUDI AG Patentabteilung**
**Postfach 220, D-8070 Ingolstadt(DE)**

**Beschreibung**

Die Erfindung betrifft eine Vorrichtung zur Beeinflußung des Kühlluftstroms an einem Kraftfahrzeug nach dem Oberbegriff des Anspruchs 1.

Kraftfahrzeuge sind üblicherweise so aufgebaut, daß an der Frontseite Kühllufteintrittsöffnungen vorgesehen sind, hinter denen ein Kühler für die Brennkraftmaschine und ggf. ein Kondensator einer Klimaanlage angebracht sind. Die Kühlluftströmung wird dabei durch die Fahrgeschwindigkeit und/oder durch einen Kühlluftventilator bewirkt. Die am Kühler bzw. am Kondensator vorbeigeführte Luft strömt als heiße Abluft üblicherweise aus dem unten offenen Motorraum an der Unterseite des Fahrzeugs entlang nach hinten weg. Diese gewünschte Luftströmung stellt sich jedenfalls bei höheren Geschwindigkeiten ein.

Bei einem Fahrzeugstillstand oder nur kleinen Geschwindigkeiten kann es dagegen dazu kommen, daß die heiße Abluft zur Frontseite des Fahrzeugs hin zurückströmt und dort als heiße Zuluft vom Gebläse angesaugt wird. Dadurch wird die erforderliche Kühlwirkung stark herabgesetzt. Der Rückströmvorgang der heißen Abluft wird bei Rückenwind noch erhöht und tritt dann auch bei geringen Fahrzeuggeschwindigkeiten auf. Die verminderte Kühlwirkung kann zu erheblichen Schäden an der Brennkraftmaschine oder einer Klimaanlage führen.

Aufgabe der Erfindung ist es daher, eine Vorrichtung zu schaffen, die den Kühlluftstrom so beeinflußt, daß eine Rückströmung zum Kühllufteintritt an der Frontseite des Fahrzeugs verhindert wird.

Diese Aufgabe wird mit den Merkmalen des Anspruchs 1 gelöst.

Gemäß Anspruch 1 ist an der vorderen Unterseite des Kraftfahrzeugs eine zur Fahrbahn hin um eine horizontale Fahrzeugquerachse schwenkbare Klappe angebracht, die sich über im wesentlichen die gesamte Fahrzeugbreite hin erstreckt. Weiter ist eine Steuereinrichtung vorgesehen, die die Schwenkbewegung bewirkt und in Abhängigkeit der Fahrgeschwindigkeit so steuert, daß die Klappe zur Fahrbahn hin bei geringen Geschwindigkeiten und/oder Fahrzeugstillstand ausgeschwenkt wird.

Damit wird erreicht, daß der Weg für einen Rückstrom der heißen Abluft zur Vorderseite des Kraftfahrzeugs abgesperrt ist, wenn die Gefahr eines Rückstroms bei Fahrzeugstillstand oder geringen Geschwindigkeiten vorliegt. Bei höheren Geschwindigkeiten kann die Klappe in den Unterschutz eingeschwenkt werden, da der Fahrtwind die heiße Abluft zur Fahrzeugrückseite befördert. Eine bei höheren Geschwindigkeiten eingeschwenkte Klappe kann den Luftwiderstand herabsetzen.

Durch die Verhinderung der Rückströmung wird besonders bei Motoren mit großer Wärmeentwicklung erreicht, daß die Kühlung weiter effektiv bleibt und weder die Motortemperatur noch der Druck des Kältemittels im Kondensator zu hoch werden.

Es ist bereits ein schwenkbarer Frontspoiler bekannt (DE-OS 31 50 152), der zur Beeinflußung des Kühlluftstroms verwendet wird. Im Gegensatz zur Erfindung ist dieser schwenkbare Spoiler zur Erfüllung seiner Spoilerfunktion gerade bei großen Geschwindigkeiten zur Fahrbahn hin ausgeschwenkt. Zudem werden mit dem Spoiler Austrittsöffnungen für die heiße Abluft an der Unterseite des Fahrzeugs mehr oder weniger abgedeckt, so daß dadurch der Durchsatz der Kühlluft beeinflußt wird. Mit der vorliegenden Erfindung dagegen wird das Zurückströmen der heißen Abluft zur Frontseite verhindert, ohne den Kühlluftdurchsatz insgesamt zu beeinflussen.

Mit den Merkmalen der Ansprüche 2 und 3 wird erreicht, daß die Klappe nur dann ausschwenkt, wenn es tatsächlich erforderlich ist, d. h. wenn die Kühlwassertemperatur über einer bestimmten Temperatur liegt bzw. der Druck im Kondensator einen bestimmten Wert überschritten hat.

Nach Anspruch 4 ergibt sich eine zweckmäßige Anordnung der Klappe dadurch, daß diese in den Unterschutz integriert ist.

Zum Schutz der ausgeschwenkten Klappe bei Hindernissen wird nach Anspruch 5 die Position der Klappe mechanisch verändert.

Dies kann in an sich bekannter Weise mit einer Aufhängung durchgeführt werden, wie sie von einem Kraftfahrzeugrückspiegel her bekannt ist.

Anhand einer Zeichnung wird ein Ausführungsbeispiel der Erfindung mit weiteren Merkmalen, Einzelheiten und Vorteilen näher erläutert.

Es zeigen

Fig. 1 einen schematischen Schnitt durch den Vorderwagen eines üblichen Kraftfahrzeugs mit einer Kühlluftströmung beim Stillstand des Fahrzeugs oder bei Rückenwind,

Fig. 2 den gleichen Schnitt wie in Fig. 1, jedoch mit der erfindungsgemäßen Vorrichtung und der dadurch geänderten Kühlluftströmung.

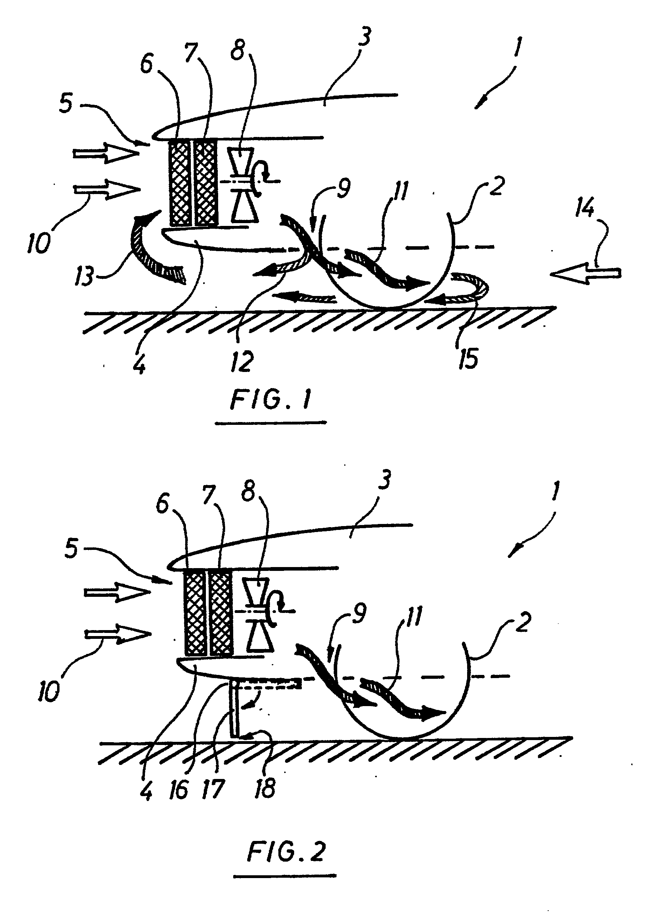

In Fig. 1 ist schematisch der Vorderwagen eines Kraftfahrzeugs 1 mit einem Vorderrad 2, einer Motorhaube 3, einem Unterschutz 4 und einem Kühllufteintritt 5 dargestellt. Nach dem Kühlluft eintritt ist ein Kondensator 6 für eine Klimaanlage und ein Kühler 7 für die Brennkraftmaschine angebracht. Im Anschluß an den Kühler 7 liegt ein Gebläse 8, das Kühlluft durch den Kondensator 6 und den Kühler 7 zieht. Die daran erwärmte Kühlluft strömt als heiße Abluft durch Öffnungen 9 an der Unterseite des Motorraums nach unten ab.

Die von vorne her über das Gebläse 8 angesaugte Kaltluft ist mit (nicht strichlierten) Pfeilen 10 bezeichnet. Die abströmende, heiße Abluft ist dagegen mit schraffierten Pfeilen 11 angedeutet.

Aus Fig. 1 ist die Strömung der heißen Abluft bei stehendem (oder mit geringer Geschwindigkeit fahrenden) Fahrzeug zu erkennen. Ein Teil der heißen Abluft wird durch die Sogwirkung des Gebläses 8 nach vorne umgelenkt (Pfeil 12) und als heiße Zuluft (Pfeil 13) wieder angesaugt, wodurch die Kühlwirkung in unerwünschter Weise herabgesetzt wird.

Bei Rückenwind (angedeutet durch Pfeil 14) wird dieser Effekt noch verstärkt, da auch heiße Abluft, die bereits im hinteren, unteren Bereich des Fahrzeugs angelangt ist, wieder nach vorne gedrängt und zurückströmen kann (Pfeil 15).

Die zurückströmende und als heiße Zuluft wieder angesaugte heiße Abluft kann zu einer unzulässig hohen Motortemperatur oder zu einem unzulässig hohen Druck im Kondensator führen.

In Fig. 2 ist das gleiche Kraftfahrzeug 1 mit Kühllufteintritt 5, Kondensator 6, Kühler 7 und Gebläse 8 sowie mit den Öffnungen 9 zum Austritt der heißen Abluft dargestellt. Erfindungsgemäß ist jedoch am vorderen Unterschutz 4 eine zur Fahrbahn hin um eine horizontal liegende Fahrzeugquerachse 16 schwenkbare Klappe 17 angeordnet. Diese Klappe steht im ausgeschwenkten Zustand etwa senkrecht und deckt den Durchgang zwischen der Fahrbahn und dem Unterschutz 4 über die gesamte Fahrzeugbreite hin ab, wobei nur ein kleiner Schlitz 18 an der Unter seite verbleibt. Dadurch kann keine heiße Abluft mehr nach vorne vom Gebläse 8 angesaugt oder von einem Rückenwind nach vorne getrieben werden. Es gelangt somit nur noch Kaltluft (Pfeile 10) in den Kühllufteintritt 5.

Die Schwenkbewegung der Klappe 17 ist durch eine (nicht dargestellte) Steuereinheit so gesteuert, daß die Klappe bei Stillstand oder nur geringer Geschwindigkeit ausgeschwenkt wird, wenn die Motor- bzw. Kühlwassertemperatur und/oder der Kältemitteldruck im Kondensator einen bestimmten Wert überschritten hat.

Die Klappe 17 ist elastisch aufgehängt, so daß sie sich im ausgefahrenen Zustand bei einem Hindernis, wie beispielsweise einer Bordkante, nachgiebig verschwenkt.

Zusammenfassend wird festgestellt, daß mit der erfindungsgemäßen Vorrichtung wirksam eine unerwünschte Rückströmung von heißer Abluft in den Bereich des Kühllufteinlasses verhindert wird.

## Patentansprüche

1. Vorrichtung zur Beeinflußung des Kühlluftstroms an einem Kraftfahrzeug,
mit einer an der vorderen Unterseite des Kraftfahrzeugs angebrachten, um eine horizontale Fahrzeugachse (16) schwenkbaren und über die Fahrzeugbreite sich erstreckenden Klappe (17) und mit einer Steuereinrichtung zur Steuerung der Schwenkbewegung,
dadurch gekennzeichnet,
daß die Steuereinrichtung in Abhängigkeit der Fahrgeschwindigkeit die Klappe (17) zur Fahrbahn hin bei geringen Geschwindigkeiten und/oder Fahrzeugstillstand ausschwenkt, damit eine Rückströmung (Pfeil 13) von heißer Abluft unter dem Fahrzeug zum Kühllufteintritt (5) an der Frontseite des Fahrzeugs (1) bzw. zum Kühler (7) der Brennkraftmaschine oder eines Kondensators (6) einer Klimaanlage verhindert wird.

2. Vorrichtung nach Anspruch 1, dadurch gekennzeichnet, daß die Steuereinheit die Klappe (17) nur über einer bestimmten Temperatur des Kühlwassers ausschwenkt.

3. Vorrichtung nach Anspruch 1 oder 2, dadurch gekennzeichnet, daß die Steuereinheit die Klappe (17) nur über einem bestimmten Druckwert im Kondensator (6) ausschwenkt.

4. Vorrichtung nach einem der Ansprüche 1 bis 3, dadurch gekennzeichnet, daß die Klappe (17) in den Unterschutz (4) integriert ist.

5. Vorrichtung nach einem der Ansprüche 1 bis 4, dadurch gekennzeichnet, daß die Klappe (17) mechanisch nachgiebig aufgehängt ist.

## Revendications

1. Dispositif destiné à influer sur le courant d'air de refroidissement dans un véhicule automobile, comportant un volet (17) qui est monté sur le côté inférieur de la voiture à l'avant, peut pivoter autour d'un axe horizontal (16) dirigé transversalement par rapport à la voiture et s'étend sur toute la largeur de celle-ci, et un dispositif de commande pour la commande automatique du mouvement pivotant, caractérisé en ce qu'en fonction de la vitesse de marche, le dispositif de commande fait basculer le volet (17) vers la chaussée lorsque la voiture roule à faible vitesse et/ou est à l'arrêt, afin d'empêcher un reflux (flèche 13) d'air l'échappement chaud audessous de la voiture vers l'entrée d'air de refroidissement (5) à l'avant de la voiture (1) ou vers le radiateur (7) du moteur à combustion interne ou un condenseur (6) d'une installation de climatisation.

2. Dispositif selon la revendication 1, caractérisé en ce que l'unité de commande ne fait basculer le volet (17) qu'au-dessus d'une température déterminée de l'eau de refroidissement.

3. Dispositif selon la revendication 1 ou 2, caractérisé en ce que l'unité de commande ne fait basculer le volet (17) qu'au-dessus d'une valeur déterminée de la pression dans le condenseur (6).

4. Dispositif selon l'une quelconque des revendications 1 à 3, caractérisé en ce que le volet (17) est intégré dans la plaque de protection (4) du moteur.

5. Dispositif selon l'une quelconque des revendications 1 à 4, caractérisé en ce que le volet (17) est suspendu de façon mécaniquement élastique.

## Claims

1. Device for controlling the cooling air flow at a motor vehicle, with a flap (17) positioned at the front underside of the motor vehicle which pivots about a horizontal vehicle axis (16) and extends over the width of the vehicle and with a control device for controlling the pivoting movement, characterized in that, depending on the speed of travel, the control device pivots the flap (17) out towards the road at slow speeds and/or when the vehicle is stationary so as to prevent a return flow (arrow 13) of hot exhaust air under the vehicle to the cooler air inlet (5) at the front of the vehicle (1) and to the cooler (7) of the internal combustion engine or of a condenser (6) of an air conditioning unit.

2. Device according to claim 1, characterized in that the control unit only pivots out the flap (17) above a certain temperature of the cooling water.

3. Device according to claim 1 or 2, characterized in that the control unit only pivots out the flap (17) above a certain pressure in the condenser (6).

4. Device according to one of claims 1 to 3, characterized in that the flap (17) is integrated with the bottom apron plate (4).

5. Device according to one of claims 1 to 4, characterized in that the flap (17) is suspended so that it can yield mechanically.

FIG.1

FIG.2